(19) Europäisches Patentamt
European Patent Office
Office européen des brevets

(11) EP 4 746 434 A1

(12) **EUROPEAN PATENT APPLICATION**
published in accordance with Art. 153(4) EPC

(43) Date of publication:
**20.05.2026 Bulletin 2026/21**

(21) Application number: **24876305.4**

(22) Date of filing: **02.09.2024**

(51) International Patent Classification (IPC):
**H04N 23/67** (2023.01)

(52) Cooperative Patent Classification (CPC):
**H04N 23/55; H04N 23/67**

(86) International application number:
**PCT/CN2024/116420**

(87) International publication number:
**WO 2025/077485 (17.04.2025 Gazette 2025/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.10.2023 CN 202311323424**

(71) Applicant: Honor Device Co., Ltd.
**Shenzhen, Guangdong 518040 (CN)**

(72) Inventors:
• **CHEN, Rui**
**Shenzhen, Guangdong 518040 (CN)**
• **YUAN, Shuai**
**Shenzhen, Guangdong 518040 (CN)**
• **WANG, Weicheng**
**Shenzhen, Guangdong 518040 (CN)**

(74) Representative: **Henselmann, Alexander Gerhard
Mitscherlich PartmbB
Karlstraße 7
80333 München (DE)**

(54) **CAMERA MODULE CONTROL METHOD, CAMERA MODULE, AND TERMINAL DEVICE**

(57) This application provides a camera module control method, a camera module, and a terminal device. The camera module has a drive apparatus and a plurality of lens group components. The drive apparatus includes a transmission member capable of performing forward and backward reciprocating motion in an axial direction. Two lens group components configured to implement a focusing function in the plurality of lens group components are disposed on the transmission member. The method includes: determining corresponding drive modes respectively for the two lens group components from a plurality of drive modes based on the obtained focusing requirement information and the current location information of the two lens group components, where the plurality of drive modes are divided based on critical times at which motion statuses of the two lens group components change relative to the transmission member; and controlling, based on drive signal determined based on the drive modes of the two lens group components, the drive apparatus to drive the two lens group components to move, to implement a continuous focusing function of the camera module. In this solution, the continuous focusing function can be implemented by using the drive apparatus. This can effectively reduce structural complexity of the camera module and reduce costs.

FIG. 2B

## Description

### CROSS-REFERENCE TO RELATED APPLICATIONS

This application claims priority to Chinese Patent Application No. 202311323424.7, filed on October 12, 2023 and entitled "CAMERA MODULE CONTROL METHOD, CAMERA MODULE, AND TERMINAL DEVICE", which is incorporated herein by reference in its entirety.

### TECHNICAL FIELD

This application relates to the field of shooting technologies, and in particular, to a camera module control method, a camera module, and a terminal device.

### BACKGROUND

To meet a high requirement of a user for shooting quality, most camera modules on terminal devices such as a mobile phone have a continuous focusing (including zooming and focusing) function. Currently, the camera module basically adjusts locations of two corresponding lens group components by using two motors, to implement continuous adjustment of zooming and focusing. However, the two motors need independent drive circuits and structures. This results in a complex structure, a large volume, and high costs of the camera module. Therefore, a new drive control solution urgently needs to be developed for the camera module.

### SUMMARY

In view of the foregoing problems, a plurality of aspects of this application provide a camera module control method, a camera module, and a terminal device, to implement location adjustment on two lens group components configured to implement a continuous focusing function by using only a single drive apparatus, thereby reducing structural complexity of the camera module and making an overall structure of the camera module more compact.

In an embodiment of this application, a camera module control method is provided. The camera module has a drive apparatus and a plurality of lens group components. The drive apparatus includes a transmission member capable of performing forward and backward reciprocating motion in an axial direction. Two lens group components configured to implement a focusing function in the plurality of lens group components are movably disposed on the transmission member. The camera module control method includes:

obtaining focusing requirement information and current location information of the two lens group components;

determining corresponding drive modes respectively for the two lens group components from a plurality of drive modes based on the focusing requirement information and the current location information, where the plurality of drive modes are divided based on critical times at which motion statuses of the two lens group components change relative to the transmission member;

determining a drive signal based on the drive modes corresponding to the two lens group components; and

controlling, based on the drive signal, the drive apparatus to drive the two lens group components to move, to implement a continuous focusing function of the camera module.

In another embodiment of this application, a camera module is further provided. The camera module includes:

a drive apparatus, including a transmission member capable of performing forward and backward reciprocating motion in an axial direction;

a plurality of lens group components, including two lens group components configured to implement a focusing function, where the two lens group components are movably disposed on the transmission member; and

a control apparatus, configured to implement steps in the camera module control method provided in the embodiment of this application.

In still another embodiment of this application, a terminal device is further provided. The terminal device includes a device body and the camera module provided in the another embodiment of this application. The camera module is installed on the device body.

According to the technical solutions provided in the embodiments of this application, the camera module has only one drive apparatus. The two corresponding lens group components on the camera module can be driven by using the drive apparatus, to implement the continuous focusing function. It can be learned that, compared with a conventional solution in which the continuous focusing function can be implemented by using two drive apparatuses (two motors), in this solution, structural complexity of the camera module can be effectively reduced, and a volume and costs of the camera module can be reduced. The drive apparatus includes the transmission member capable of performing forward and backward reciprocating motion in the axial direction. The two lens group components configured to implement the focusing function are movably disposed on the transmission member. Specifically, the continuous focusing function of the camera module is implemented in the following manner: obtaining focusing requirement information and current location information of the two lens group components; determining corresponding drive modes respectively for the two lens group components from a plurality of drive modes based on the focusing requirement information and the current location information of the two lens group components, where the plurality of drive modes are divided based on critical times at which motion statuses of the two lens group components change relative to the transmission member; and determining a drive signal based on the drive modes corresponding to the two lens group components, and controlling, based on the drive signal, the drive apparatus to drive the two lens group components to move, to implement the continuous focusing function. By using the drive signal determining manner provided in this solution, the drive apparatus can have a relatively good long drive stroke and high-precision drive control, thereby ensuring more accurate continuous focusing (or also referred to as continuous optical zooming) effect.

## BRIEF DESCRIPTION OF DRAWINGS

The accompanying drawings described herein are used for providing a further understanding of this application, and constitute a part of this application. Example embodiments of this application and descriptions thereof are used for explaining this application, but do not constitute any inappropriate limitation on this application. In the accompanying drawings:

FIG. 1 is a diagram of a structure of an existing camera module according to an example embodiment of this application;
FIG. 2A and FIG. 2B each are a diagram of a structure of a camera module according to an embodiment of this application;
FIG. 3 is a front view and a side view of a drive apparatus in a camera module according to an example embodiment of this application;
FIG. 4A is a diagram of a principle of reciprocal bending deformation performed by a drive part of a drive apparatus according to an example embodiment of this application;
FIG. 4B is diagram of a displacement-time curve of a moving part in the drive apparatus and a single-cycle drive signal applied to a drive apparatus according to an example embodiment of this application;
FIG. 5 is a schematic flowchart of a camera module control method according to an example embodiment of this application;
FIG. 6 is a diagram of a principle of triggering a focusing operation according to an example embodiment of this application;
FIG. 7 is a diagram of structures of two corresponding lens group components movably disposed on a transmission member provided by a drive apparatus according to an example embodiment of this application;
FIG. 8 is a diagram of a curve of a displacement-time relationship of a target lens group component and a curve of a drive signal applied to a drive apparatus according to an example embodiment of this application;
FIG. 9A and FIG. 9B each are a diagram of a principle of dividing a plurality of drive modes according to an embodiment of this application;
FIG. 9C is specific values of some parameters of two drive modes according to an example embodiment of this application;
FIG. 10 is a diagram of a principle of a process of determining a drive signal according to an example embodiment of this application;
FIG. 11 is a diagram of a principle of driving two corresponding lens group components to move by using a drive signal according to an example embodiment of this application; and
FIG. 12 is a diagram of a structure of a terminal device according to an example embodiment of this application.

## DESCRIPTION OF EMBODIMENTS

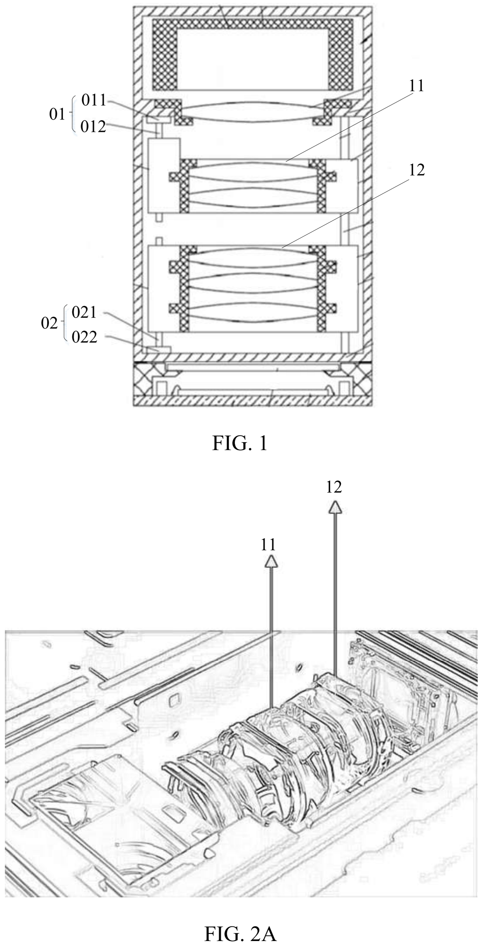

Currently, most camera modules on terminal devices drive two corresponding lens group components by using two motors, to implement location adjustment of the two lens group components, thereby achieving continuous focusing (including zooming and focusing). However, because drive circuits need to be respectively disposed for the two motors, the camera module has a complex structure, a large volume, and high costs. In addition, when the two motors are used to drive the two corresponding lens group components, a driving guide rod is basically an electromagnetic guide rod or a ball guide rod. When the driving guide rod is an electromagnetic guide rod, correspondingly, the motor needs to be an electromagnetic motor. The electromagnetic motor is prone to magnetic interference from the entire device. Continuous focusing requires the motor to have a long drive stroke and high-precision drive control. This also makes the design of the electromagnetic motor more difficult. An existing solution for problems such as a long drive stroke and magnetic interference is using a piezoelectric motor. However, a problem in which two piezoelectric motors need to be used for driving two corresponding lens group components is not resolved. For example, in a camera module structure shown in FIG. 1, a zoom lens group component 11 needs to be driven by using a piezoelectric motor 01, and a focus lens group component 12 needs to be driven by using a piezoelectric motor 02.

According to the foregoing content, a new drive control solution urgently needs to be designed for the camera module, to resolve the foregoing problems existing in a current camera module in a continuous focusing scenario. The continuous focusing is also referred to as continuous optical zooming.

To resolve the foregoing problem, a basic idea of designing drive control for the camera module in this application is as follows: driving and controlling motion of two corresponding lens group components in the camera module by using a single piezoelectric motor (corresponding to the drive apparatus described below). In addition, a rising edge duration and/or a falling edge duration of a drive signal applied for the single piezoelectric motor are/is further set based on a critical time corresponding to changes of motion statuses of the two lens group components. For details about the motion status of the lens group component and the corresponding critical time, refer to the following related content. Based on the basic ideas of the design, embodiments of this application provide a camera module control method, a camera module, and a terminal device.

To make the objective, technical solutions, and advantages of this application clearer, the technical solutions of this application are clearly and completely described below with reference to specific embodiments of this application and corresponding accompanying drawings. It is clear that the described embodiments are merely some but not all of embodiments of this application. Based on embodiments of this application, all other embodiments obtained by a person of ordinary skill in the art without creative efforts shall fall within the protection scope of this application.

To clearly describe the technical solutions in embodiments of this application, in embodiments of this application, words such as "first" and "second" are used to distinguish between same items or similar items with basically the same functions and effects. For example, a first signal generation circuit and a second signal generation circuit are merely used to distinguish between different signal generation circuits, and do not limit a sequence of the first signal generation circuit and the second signal generation circuit. A person skilled in the art may understand that the words "first", "second", and the like do not limit a quantity and an execution sequence, and the words "first", "second", and the like are not limited to be necessarily different.

It should be noted that, in this application, words such as "example" or "for example" are used to represent giving an example, an illustration, or a description. Any embodiment or design scheme described as an "example" or "for example" in this application should be construed as being more preferable or more advantageous than other embodiments or design schemes. To be precise, use of the words such as "example" or "for example" is intended to present a relative concept in a specific manner. In addition, in this application, "at least one" means one or more, and "a plurality of" means two or more. "And/or" describes an association relationship between associated objects and represents that three relationships may exist. For example, A and/or B may indicate: only A exists, both A and B exist, and only B exists, where A and B may be singular, plural, or the like. The character "/" usually indicates an "or" relationship between associated objects. "At least one of the following" or a similar expression thereof indicates any combination of these items, including a single item or any combination of a plurality of items. For example, at least one item (piece) of a, b, and c may represent the following: a, b, c, a and b, a and c, b and c, or a, b, and c.

The following describes in detail the technical solutions provided in embodiments of this application with reference to the accompanying drawings.

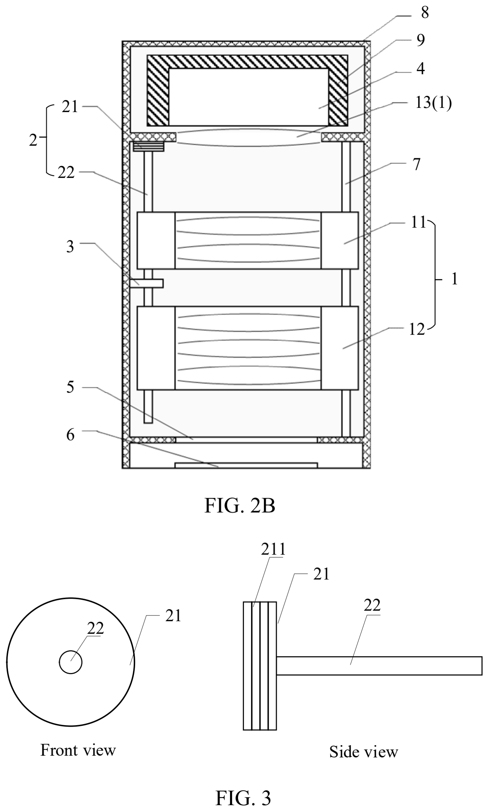

The method embodiments provided in this application may be implemented on hardware of the camera module provided below. FIG. 2A and FIG. 2B each are a diagram of a structure of a camera module according to this application. The camera module may be a periscope camera module, and more specifically, may be a piezoelectric periscope camera module. As shown in FIG. 2b, the camera module includes a plurality of lens group components 1 and a drive apparatus 2.

The plurality of lens group components 1 include two lens group components configured to implement a focusing function, that is, include two lens group components that need to move.

For example, the plurality of lens group components include a zoom lens group component (Zoom lens) 11, a focus lens group component (AF (Auto Focus) lens) 12, and a fastened lens group component 13. The zoom lens group component 11 and the focus lens group component 12 are lens group components that need to move, and are configured to implement a focusing function. More specifically, the zoom lens group component 11 is configured to implement a zooming function, and the focus lens group component 12 is configured to implement the focusing function. The fastened lens group component 13 is a lens group component that does not need to move, and is fastened in the camera module.

In order that the two lens group components configured to implement the focusing function may move in a specific direction (that is, an optical axis direction of the camera module), the camera module further includes a lens group guide member 7. An extension direction of the lens group guide member 7 is the same as the optical axis direction. The plurality of lens group components 1 are all disposed on the lens group guide member 7. Specifically, the lens group component that needs to move and the lens group guide member 7 may be movably installed, and the lens group component that does not need to move and the lens group guide member 7 are fixedly installed. The lens group guide member 7 may guide a lens group component that needs to move in the optical axis direction.

The lens group guide member 7 may be a guide rod, for example, a ball guide rod or a rail guide rod. During specific setting, a plurality of lens group guide members 7 may be spaced and disposed, so that the lens group component that needs to move moves more smoothly in the optical axis direction. For example, two lens group guide members 7 may be disposed, and the two lens group guide members 7 are distributed in parallel to each other at two opposite ends of the lens group component.

It should be further noted herein that a transmission member 22 included in the drive apparatus 2 described below is also essentially a guide member, and is specifically a guide member configured to guide a moving part 23 in the drive apparatus 2 to move in the optical axis direction. If both the transmission member 22 and the lens group guide member 7 are disposed on one side (for example, on the left side) of the camera module, the transmission member 22 may be disposed below the lens group guide member 7.

The drive apparatus 2 is a piezoelectric drive apparatus, and is more specifically a piezoelectric motor. In this embodiment, the piezoelectric drive apparatus is used. Compared with an electromagnetic drive apparatus (electromagnetic motor) used in a conventional camera module, the piezoelectric drive apparatus has advantages such as a long drive stroke, high-precision drive control, and no magnetic interference.

FIG. 3 separately shows examples of a front view and a side view of the drive apparatus 2. The front view is obtained by observing in the optical axis direction from the other end that is of the transmission member 22 and that is not connected to the drive part 21. As shown in FIG. 3 or FIG. 2b, the drive apparatus 2 includes a drive part 21 and a transmission member 22.

One end of the transmission member 22 is fastened to the drive part 21, and can be driven by the drive part 21 to perform forward and backward reciprocating motion in the axial direction (that is, in the optical axis direction). The axial direction of the transmission member is related to setting the camera module along a length or width direction of the terminal device. For example, if the camera module is disposed along the length direction of the terminal device, the axial direction of the transmission member is a vertical direction, and correspondingly, forward and backward reciprocating motion of the transmission member may be upward and downward reciprocating motion. For another example, if the camera module is disposed along the width direction of the terminal device, the axial direction of the transmission member is a horizontal direction, and correspondingly, forward and backward reciprocating motion of the transmission member may be leftward and rightward reciprocating motion.

The transmission member 22 extends vertically from a junction with the drive part 21. FIG. 3 shows an example in which one end of the transmission member 22 is fastened to a central location of the drive part 21. In addition, the transmission member 22 is a rod transmission member, and a shape of a cross section of the transmission member 22 may be but is not limited to a circle or a polygon and is preferably a circle.

The drive part 21 may include at least one layer of (single-layer or multi-layer) piezoelectric vibrator 211. During specific implementation, the drive part 21 preferably includes a multi-layer piezoelectric vibrator 211. A reason is as follows:

When the drive part includes a single-layer piezoelectric vibrator, a drive voltage that needs to be used (a signal voltage corresponding to a drive signal) is relatively high. For example, the drive voltage may need to be 20 V to 30 V, and a voltage of a terminal device such as a mobile phone is usually relatively low. To meet a drive voltage requirement, a boost circuit is necessary, thereby increasing structural complexity of the terminal device. When the drive part includes a multi-layer piezoelectric vibrator, an inter-layer spacing between adjacent layers of the piezoelectric vibrator may be reduced by using differential electrodes or the like, to reduce the drive voltage that needs to be used.

Both FIG. 2b and FIG. 3 show examples in which the drive part 21 includes multiple layers of piezoelectric vibrators. Attributes (for example, form attributes such as a size, a shape, and a thickness, and a material attribute) of the multiple layers of piezoelectric vibrators are the same. The piezoelectric vibrator (also referred to as a piezoelectric vibrator or a piezoelectric resonator) can perform reciprocating bending deformation under a drive signal, to drive the transmission member 22 to perform forward and backward reciprocating motion. The drive signal is a piezoelectric signal, and is specifically, for example, a PWM (Pulse width modulation, pulse width modulation) signal or a sawtooth signal. A design and an implementation of the drive signal are to be described in detail in the following method embodiments.

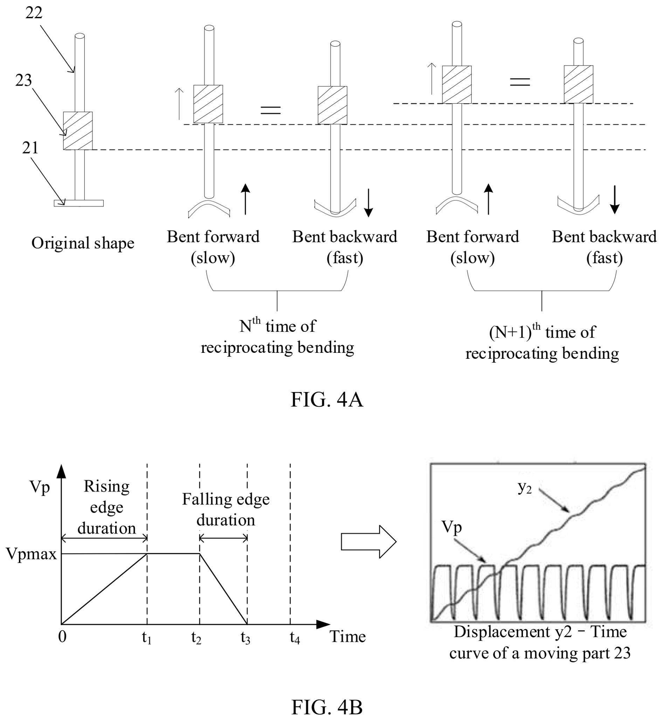

In specific implementation, when a drive signal is applied to two ends of the drive part 21, the drive part 21 is compressed in a radial direction under an electric field, and a tensile stress is generated inside, so that the drive part 21 can perform reciprocating bending deformation. In a signal cycle of the drive signal (that is, in a single-cycle drive signal period), the drive part 21 performs reciprocating bending deformation once. For example, with reference to FIG. 4A, one time of reciprocating bending deformation of the drive part 21 may include forward bending deformation and backward bending deformation. When the drive part 21 is bent and deformed forward, the transmission member 22 is driven to move forward.

A forward bending deformation degree of the drive part 21 reaches the maximum. When the drive part 21 is bent and deformed backward, the transmission member 22 is driven to move backward. A displacement $S_0$ of forward and backward reciprocating bending deformation of the transmission member 22 is equal to an absolute location difference between a location a and a location b. The location a is a location of the other end that is of the transmission member and that is not connected to the drive part 21 when the forward bending deformation degree of the drive part 21 reaches the maximum. The location b is a location of the other end of the transmission member when a backward bending deformation degree of the drive part 21 reaches the maximum.

In addition, in a reciprocating bending deformation process of the drive part 21, when the drive part 21 is bent and deformed forward or backward from an original shape (a flat plate shape) to another shape (for example, protrudes forward or recesses backward), the drive part 21 is slowly bent and deformed due to resistance, and is quickly restored to the original shape due to elasticity in a process in which the drive part 21 is restored from another shape to the original shape (the flat plate shape).

Further, still with reference to FIG. 4A, the drive apparatus 2 may further include a moving part 23. The moving part 23 may be movably disposed on the transmission member 22. Specifically, the moving part 23 may be movably disposed on the transmission member 22 through friction fitting. In other words, the moving part 23 is tightly connected (in other words, tightly fitted) to the transmission member 22, and has a specific pre-tightening force for the transmission member 22. In specific implementation, the moving part 23 may be a clamping mechanism for clamping the transmission member 22, for example, a clamping mechanism all or partially made of elastic materials. A clamping force of the clamping mechanism is adjustable. The clamping force is the pre-tightening force.

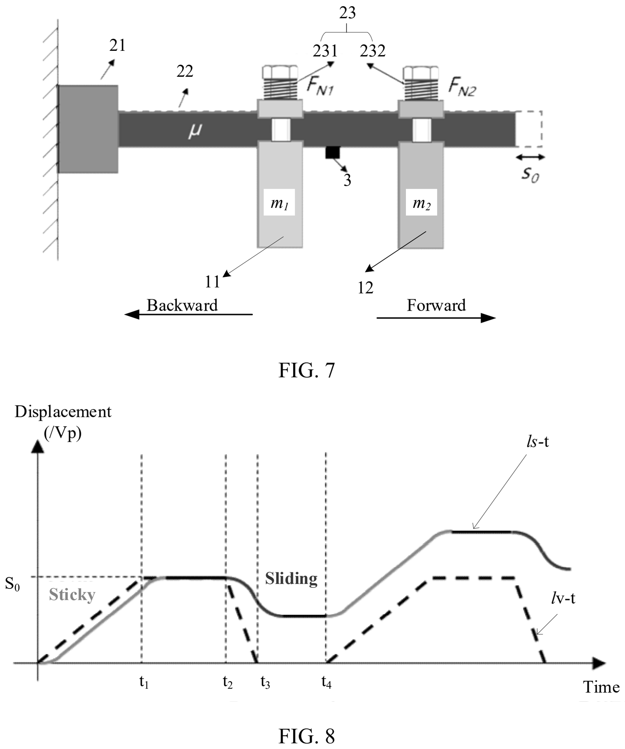

FIG. 7 shows an example in which the moving part 23 is a clamping mechanism (an elastic pre-tightening apparatus) partially made of elastic materials.

The transmission member 22 can guide the moving part 23 to move. Specifically, when the drive part 21 performs reciprocating bending deformation once, the moving part 23 and the transmission member move together. More specifically, in a process in which the drive part 21 is bent forward and deformed slowly, for example, the drive part protrudes forward from the original shape and is deformed, and a moving speed of the transmission rod is also relatively slow, the moving part 23 usually moves with the transmission member 22, and a location of the moving part 23 relative to the transmission member 22 does not change. In other words, the moving part 23 does not slide relative to the transmission member 22. Therefore, the moving part 23 is in a sticky state relative to the transmission member 22. In a process in which the drive part is bent backward and fast restored to the original shape (the flat plate shape), the transmission member 22 also fast moves backward. In this case, the moving part 23 cannot follow motion of the transmission member 22 due to inertia, so that the moving part 23 can only stay at a location. A location of the moving part 23 relative to the transmission member 22 changes. In other words, the moving part 23 slides relative to the transmission member 22. Therefore, the moving part 23 is in a sliding state relative to the transmission member 22. It can be learned from the foregoing that a motion status of the moving part 23 relative to the transmission member 22 includes a sticky state and a sliding state. In addition, in one reciprocating bending deformation process of the drive part 21, the location of the moving part 23 may change and generate a displacement (displacement difference). After a plurality of times of reciprocal bending deformation of the drive part 21, the moving part 23 may be finally moved to a target location.

A left side in FIG. 4B shows a single-cycle drive signal applied to the drive part 21. During a single-cycle drive signal period, the drive part 21 performs reciprocating bending deformation once. In a time period from $t_1$ to $t_2$ and a time period from $t_3$ to $t_4$, the drive part 21 is in a corresponding bending deformation holding state. For example, when $t_1$ is reached, a forward protrusion degree of the drive part reaches the maximum, and then the drive part keeps in the maximum forward protrusion degree in the time period from $t_1$ to $t_2$. A right side in FIG. 4B shows a curve diagram of a displacement y2 that is of the moving part 23 and that changes over time in a process of a plurality of times of reciprocating bending deformation of the drive part 21 by applying a multi-cycle drive signal. In one reciprocating deformation process of the drive part 21, the displacement generated by the moving part 23 is accumulated in a forward and backward reciprocating motion process of the transmission member driven by the drive part 21, and is related to a motion status of the moving part 23 relative to the transmission member. Specifically, a displacement generated in the sticky state is 0, and a displacement generated in a sliding state is related to an acceleration a obtained by the moving part based on a dynamic friction force of the transmission member. For example, with reference to a single-cycle drive signal shown on the left side in FIG. 4B, it is assumed that the moving part 23 is in the sliding state relative to the transmission member in a time period from 0 to $t_1$, and may be considered to be in a phase of staying in the sliding state in a time period from $t_1$ to $t_2$; and the moving part 23 is in the sticky state relative to the transmission member in a time period from $t_2$ to $t_3$, and may be considered to be in a phase of staying in the sticky state in a time period from $t_3$ to $t_4$. In one corresponding forward and backward reciprocating motion process of the transmission member driven by the drive part 21 in a time period from 0 to $t_4$, when an initial speed is set to 0, the displacement accumulatively generated by the moving part 23 may be equal to $a*(t_2-0)^2$.

Still further, the drive apparatus 2 further includes a first carrier (not specifically specified in the figure) configured to carry a lens group component. One first carrier is configured to carry one lens group component, and is connected to one corresponding moving part 23. The moving part 23 drives, by using the drive part 21 and the transmission member 22, the corresponding first carrier to move, to drive the lens group component on the first carrier to move.

In this embodiment, because the two lens group components need to be driven by using the drive apparatus 2, the drive apparatus includes at least two first carriers and two moving parts 23. Because the lens group component that needs to move is driven by the corresponding first carrier driven by the corresponding moving part 23, the motion status of the lens group component that needs to move relative to the transmission member 22 may be represented by using a motion status of the corresponding moving part 23 relative to the transmission member 22. In a process in which the transmission member performs one time of forward and backward reciprocating motion, a displacement that can be generated by the lens group component that needs to move relative to the transmission member 22 may also be represented by using a corresponding displacement that can be generated by the moving part 23 relative to the transmission member 22. The acceleration a obtained by the moving part due to the dynamic friction force of the transmission member is related to a weight of the corresponding lens group component. Therefore, this may also be referred to as an acceleration a obtained by the lens group component corresponding to the moving part due to the dynamic friction force of the transmission member.

For example, with reference to FIG. 7, a weight of the zoom lens group component 11 is $m_1$, the dynamic friction force and a dynamic friction coefficient of the transmission member 22 are respectively $F_f$ and $\mu$, the zoom lens group component 11 is driven by using a moving part 231, and a pre-tightening force of the moving part 231 for the transmission member 22 is $F_N$. In this case, an acceleration $a_1$ obtained by the moving part 231, that is, the zoom lens group component 11 due to the dynamic friction force of the transmission member 22 is equal to $F_f/m_1$, where $F_f = \mu(m_1 g + F_N)$. If the moving part 231 is in the sticky state relative to the transmission member 22, a motion status of the zoom lens group component 12 relative to the transmission member 22 is the sticky state. Still in the foregoing example described with reference to FIG. 4B, in a process in which the transmission member performs forward and backward reciprocating motion once, if a displacement accumulatively generated by the moving part 231 relative to the transmission member 22 is $a*(t_2-0)^2$, a displacement accumulatively generated by the zoom lens group component 11 relative to the transmission member 22 is $a*(t_2-0)^2$.

Further, to avoid collision between two lens group components that need to move in a moving process, the camera module may further include a limiting apparatus 3. The limiting apparatus 3 may be sleeved on and assembled with the transmission member 22, and is located between the two lens group components that need to move. In specific implementation, the limiting apparatus may be but is not limited to a limiting ring, a limiting rod, or the like. When the limiting apparatus 3 is a limiting rod, one end of the limiting apparatus 3 is fastened to the inside of a housing 8 of the camera module, and a through hole, a groove, or the like may be provided on the other end of the limiting apparatus 3, to implement sleeve assembly with the transmission member 22. In this case, the limiting apparatus 3 can further support the transmission member 22.

In addition to the foregoing components, the camera module may further include other components, such as the housing 8, a refractive component, an optical filter 5, a photosensitive element 6, and a control apparatus (not shown in FIG. 2b).

The housing 8 has accommodating space. The drive apparatus 2, the plurality of lens group components 1, the refractive component, the carrier (such as the first carrier and a second carrier 9), the optical filter 5, the photosensitive element 6, and the like are all disposed in the accommodating space formed in the housing 8, so that the camera module has a relatively compact structure configuration.

The refractive component includes the second carrier 9 and a refractive element 4 installed on the second carrier 9. The refractive element 4 is configured to: receive imaging light from a shot object (light reflected (or emitted) by the shot object), and bend the imaging light onto a corresponding lens group component 1, to focus the imaging light onto the photosensitive element 6 by using the lens group component. In specific implementation, the refractive element 4 may be a reflector (for example, a plane reflector) or a photorefractive prism (for example, a triangular prism). Certainly, the refractive element 4 may alternatively be another type of optical element. This is not specifically limited in this embodiment.

The optical filter 5 is configured to filter corresponding light. For example, if the optical filter 5 is an infrared optical filter, the optical filter 5 is responsible for filtering out unnecessary infrared light in the imaging light. The filtered imaging light is focused on the photosensitive element 6.

The photosensitive element 6 is an image sensor, and may be specifically a charge coupled device (charge coupled device, CCD) or a complementary metal-oxide-semiconductor (complementary metal-oxide-semiconductor, CMOS) phototransistor. The photosensitive element 6 is configured to convert imaging light (an optical signal) into an electrical signal and then transmit the electrical signal to the ISP (Image Signal Processing, image processing chip) for processing, to convert the electrical signal into a digital image signal. Further, the ISP may further output a digital image to a DSP (Digital Signal Processing, digital signal processor) for processing. The DSP converts the digital image signal into an image signal in a standard format such as RGB and YUV.

For specific function implementation of the control apparatus, refer to related content of the method embodiments described below.

It should be generally noted that FIG. 2b shows merely an example of a component/an apparatus included in the camera module, but it does not mean that the camera module includes only the component/apparatus shown in FIG. 2b.

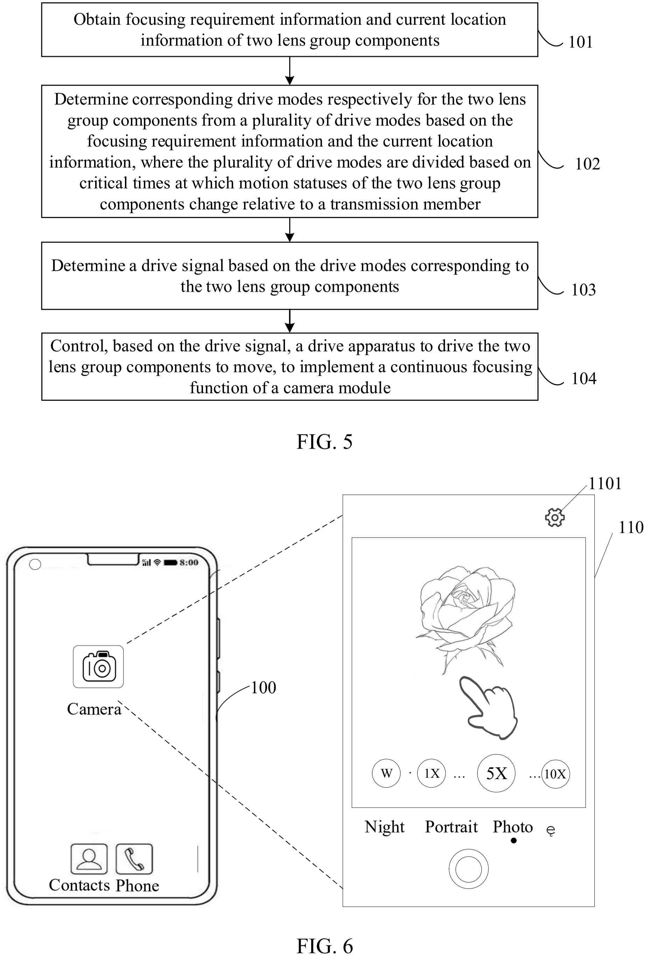

FIG. 5 is a schematic flowchart of a camera module control method according to an embodiment of this application. The method is performed by a camera module control apparatus. The control apparatus may be any apparatus that has data analysis and processing capabilities, such as a processor. The camera module has a drive apparatus and a plurality of lens groups. The drive apparatus includes a transmission member capable of performing forward and backward reciprocating motion in an axial direction. Two lens group components configured to implement a focusing function in the plurality of lens group components are disposed on the transmission member. For details about components such as a drive apparatus and the lens group component included in the camera module, refer to related content described in detail for the camera module provided in another embodiment of this application. As shown in FIG. 5, the camera module control method provided in this embodiment of this application includes the following steps:

101: Obtain focusing requirement information and current location information of the two lens group components.
102: Determine corresponding drive modes respectively for the two lens group components from a plurality of drive modes based on the focusing requirement information and the current location information, where the plurality of drive modes are divided based on critical times at which motion statuses of the two lens group components change relative to the transmission member.
103: Determine a drive signal based on the drive modes corresponding to the two lens group components.
104: Control, based on the drive signal, the drive apparatus to drive the two lens group components to move, to implement a continuous focusing function of the camera module.

In 101, the focusing requirement information may be obtained based on a focusing operation triggered by a user, and includes a zooming multiple requirement.

For example, with reference to FIG. 6, the user enables a shooting function by tapping a camera application icon on a terminal device, and comes to a shooting interface 110. Then, the focusing operation is triggered on the shooting interface according to a shooting requirement of the user. For example, the user performs a pinch zooming (zooming with fingers) operation on the shooting interface, to set a zoom factor to 5X (5 times); or taps a settings icon on the shooting interface to come to a setting items interface (not shown in the figure), and selects "Manual focus" in setting items to manually set a corresponding zoom factor or the like by using pop-up adjustment items of 1-N different focusing magnitudes. In response to the triggered focusing operation, the terminal device obtains the input focusing requirement information and sends the input focusing requirement information to the camera module on the terminal device.

The current location information of the two lens group components configured to implement the focusing function may be obtained based on but not limited to a current zoom factor, definition of an output image, and the like. The two lens group components specifically include the zoom lens group component and the focus lens group component. Specifically, the current location information of the zoom lens group component may be determined based on the current zoom factor, and the location information of the focus lens group may be determined based on the definition of the current output image. Certainly, the current location information of the zoom lens group component and the focus lens group component may alternatively be determined in another manner. For a specific determining manner, refer to existing related content.

Further, in this embodiment, the plurality of drive modes are preset for the two lens group components, to provide data support for determining, for the drive apparatus, a drive signal that needs to be applied. The plurality of drive modes are divided based on critical times at which motion statuses of the two lens group components change relative to the transmission member. For details about the motion status of the lens group component relative to the transmission member, refer to related content in other embodiments of this application. The critical time may be deduced according to Newton's law of motion. Specifically, if the target lens group component is either of the two lens group components, the critical time corresponding to the target lens group component may be calculated by using the following steps:

S11: Obtain a weight of the target lens group component and parameter information, related to the target lens group component, of the transmission member.
S12: Calculate, based on the weight and the parameter information, the critical time corresponding to the target lens group component.

The parameter information includes at least: a pre-tightening force of the target lens group component for the transmission member, a dynamic friction coefficient of the transmission member, and a displacement of the transmission member in the forward and backward reciprocating motion.

In specific implementation, the pre-tightening force specifically indicates a pre-tightening force of the moving part that is connected to the target lens group component and that closely fits the transmission member. For details about a displacement of the transmission member for forward and backward reciprocating motion, refer to related content in the foregoing other embodiments. According to the Newton's law of motion, based on the weight of the target lens group component and the parameter information, related to the target lens group component, of the transmission member, a plurality of relational expressions may be listed below for calculation of the critical time corresponding to the target lens group component:

$$\begin{cases} \dfrac{s_0}{t_c} = a t_c \\[2mm] a = \dfrac{F_f}{m} \\[2mm] F_f = \mu(mg + F_N) \end{cases}$$

.

Herein, $s_0$ represents the displacement of the transmission member for forward and backward reciprocating motion, $t_c$ represents the critical time corresponding to the target lens group component, $m$ represents the weight of the target lens group component, $\mu$ represents a dynamic friction coefficient of the transmission member, $F_N$ represents the pre-tightening force, $F_f$ represents the dynamic friction force, a represents an acceleration obtained by the target lens group component due to the dynamic friction force, and g represents a gravity acceleration.

According to the plurality of relational expressions above, a calculation formula of the critical time $t_c$ corresponding to the target lens group component may be deduced as follows:

$$t_c = \sqrt{\dfrac{m s_0}{\mu(mg + F_N)}}$$

.

In FIG. 8, a solid curve $ls$-$t$ is a curve of a relationship between the displacement of the target lens group component (that is, the displacement of the moving part corresponding to the target lens group) and time, and a dashed curve $lv$-$t$ represents a drive signal applied to the drive part 21 of the drive apparatus. A rising edge duration $t_1$ of the drive signal can represent a first duration corresponding to forward motion of the transmission member 22. A falling edge duration $t_3$-$t_2$ can represent a second duration corresponding to backward motion of the transmission member 22. When the transmission member moves forward/backward, a corresponding duration is relatively long (greater than the critical time corresponding to the target lens group component). Slow motion of the transmission member may be reflected. The target lens group component can follow motion of the transmission member. Therefore, the target lens group component is in a sticky state relative to the transmission member. When the transmission member moves forward/backward, a corresponding duration is relatively short (less than the critical time corresponding to the target lens group component). Fast motion of the transmission member may be reflected. The target lens group component cannot follow motion of the transmission member. The target lens group component slides relative to the transmission member and therefore is in a sliding state. Based on this content, the motion status of the target lens group relative to the transmission member may be determined as follows:

When a first condition is satisfied, it may be considered that the motion status of the target lens group relative to the transmission member is the sticky state.

$$t_1 > t_c, \text{ or } t_3 - t_2 > t_c$$

When a second condition is satisfied, it may be considered that the motion status of the target lens group relative to the transmission member is the sliding state.

$$t_1 < t_c, \text{ or } t_3 - t_2 < t_c$$

Based on the foregoing content, the critical times corresponding to the zoom lens group component 11 and the focus lens group component 12 shown in FIG. 7 may be as follows:

$$t_{c1} = \sqrt{\frac{m_1 s_0}{\mu(m_1 g + F_{N1})}} \text{, and } t_{c2} = \sqrt{\frac{m_2 s_0}{\mu(m_2 g + F_{N2})}} \, .$$

Herein, $t_{c1}$ represents the critical time corresponding to the zoom lens group component 11, $m_1$ represents the weight of the zoom lens group component 11, $F_{N1}$ represents a pre-tightening force of the moving part 231 corresponding to the zoom lens group component 11, $t_{c2}$ represents the critical time corresponding to the focus lens group component 12, $m_2$ represents a weight of the focus lens group component 12, and $F_{N2}$ represents a pre-tightening force of a moving part 232 corresponding to the focus lens group component 12.

When continuous focusing is implemented, zooming usually needs to be performed first before focusing. In other words, the zoom lens group component 11 needs to be first adjusted to a corresponding first target location, and then the focus lens group component 12 needs to be adjusted to a corresponding second target location. On this basis, the critical time $t_{c1}$ corresponding to the zoom lens group component 11 is usually less than the critical time $t_{c2}$ corresponding to the focus lens group component 12. In other words, $t_{c1} < t_{c2}$.

Further, based on the calculated critical times respectively corresponding to the zoom lens group component 11 and the focus lens group component 12, the plurality of drive modes may be determined by using the following steps:

S21: Determine a plane rectangular coordinate system by using a first duration required for forward motion of the transmission member (that is, the rising edge duration $t_1$ of the drive signal) as an X-axis and a second duration required for backward motion (that is, the falling edge duration $t_3$-$t_2$ of the drive signal) as a Y-axis.

S22: Divide the plane rectangular coordinate system based on the critical times corresponding to the two lens group components and an angle bisector of the plane rectangular coordinate system, to obtain a division result.

S23: Determine the plurality of drive modes based on the division result.

Each drive mode in the plurality of drive modes includes the following parameters:

during the forward motion of the transmission member, a value range of the required first duration and motion statuses of the two lens group components relative to the transmission member; and

during the backward motion of the transmission member, a value range of the required second duration and motion statuses of the two lens group components relative to the transmission member; and

displacement information respectively generated by the two lens group components in one time of forward and backward reciprocating motion of the transmission member. The displacement information includes a displacement (that is, an accumulated displacement in the single-cycle drive signal described in the context) and a displacement direction. The displacement may be obtained through calculation according to a corresponding displacement calculation formula based on the motion status of the lens group component and the acceleration a. For details about the displacement herein, refer to related content in the foregoing other embodiments of this application. The displacement direction can reflect whether the lens group component moves away from or close to the drive part in the drive apparatus.

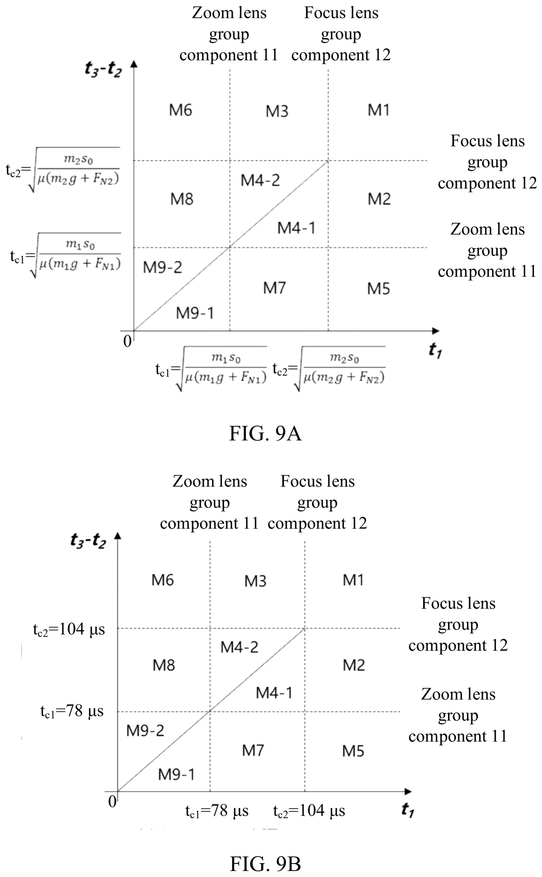

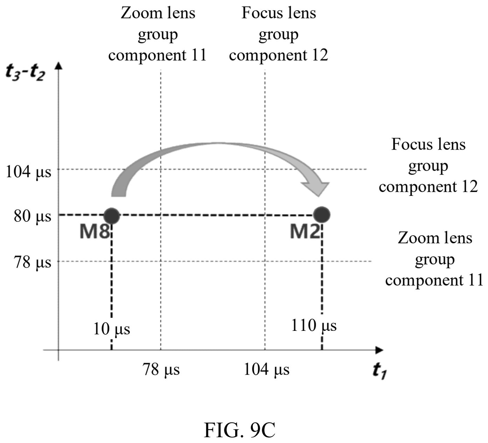

FIG. 9A is a diagram of implementation principles of steps S21 and S22 above. As shown in FIG. 9A, finally determined drive modes are 11 drive modes, that is, drive modes M1 to M3, a drive mode M4-1, a drive mode 4-2, drive modes M5 to M8, a drive mode M9-1, and a drive mode 9-2.

The drive mode M2 is used as an example. A first-duration value range required when a transmission member corresponding to the drive mode M2 moves forward is $t_1 \geq t_{c2}$, and a second-duration value range required when a transmission member moves backward is $t_{c1} \leq t_3$-$t_2 < t_{c2}$. On this basis, for the zoom lens group component 11, because $t_1 \geq t_{c2}$ and $t_{c2} > t_{c1}$, $t_1 \geq t_{c1}$. When the transmission member moves forward (that is, in a rising edge time period of the drive signal), a motion status of the zoom lens group component 11 relative to the transmission member is the sticky state. In addition, because $t_3$-$t_2 \geq t_{c1}$, when the transmission member moves backward (that is, in a falling edge time period of the drive signal), a motion status of the zoom lens group component 11 relative to the transmission member is also the sticky state. With reference to FIG. 7, in a process of one time of forward and backward reciprocating motion of the transmission member, the zoom lens group component 11 moves with the transmission member, and generates no displacement relative to the transmission member, that is, the displacement is 0. Similarly, because $t_1 \geq t_{c2}$, when the transmission member moves forward, a motion status of the focus lens group component 12 relative to the transmission member is the sticky state. Because $t_3$-$t_2 < t_{c2}$, when the transmission member moves forward, a motion status of the focus lens group component 12 relative to the transmission member is the sliding state. Still with reference to FIG. 7, in a process of one time of forward and backward reciprocating motion of the transmission member, the focus lens group component 12 moves with the transmission member 22 in a forward motion phase of the transmission member, and generates a backward displacement because the focus lens group component 12 cannot move with the transmission member 22 in a backward motion phase of the transmission member. In other words, in a process of one time of forward and backward reciprocating motion of the transmission member, the focus lens group component 12 relative to the transmission member 22 generates a backward displacement, and a distance between the focus lens group component 12 and the drive part 21 decreases.

In the foregoing example, parameters included in the drive mode M2 are as follows: when the transmission member moves forward, a value range of the required first duration being $t_1 \geq t_{c2}$, and both the zoom lens group component 11 and the focus lens group component 12 being in the sticky state; when the transmission member moves backward, a value range of the required second duration being $t_{c1} \leq t_3 - t_2 < t_{c2}$, the zoom lens group component 11 being in the sticky state, and the focus lens group component 12 being in the sliding state; and in one time of forward and backward reciprocating motion of the transmission member, a displacement of the zoom lens group component 11 being 0, and the focus lens group component 12 generating a forward displacement $\delta s$. If a generated forward displacement is a positive displacement, the displacement $\delta s$ of the focus lens group component 12 is greater than 0.

Table 1 below shows some parameters included in each drive mode for the plurality of drive modes shown in FIG. 9A.

Table 1: some parameters included in a plurality of drive modes

| Drive mode | Zoom lens group component 11 | | | Focus lens group component 12 | | |
|---|---|---|---|---|---|---|
| | Rising edge | Falling edge | Displacement | Rising edge | Falling edge | Displacement |
| M1 | Sticky | Sticky | 0 | Sticky | Sticky | 0 |
| M2 | Sticky | Sticky | 0 | Sticky | Slide | >0 |
| M3 | Sticky | Sticky | 0 | Slide | Sticky | <0 |
| M4-1 | Sticky | Sticky | 0 | Slide | Slide | >0 |
| M4-2 | Sticky | Sticky | 0 | Slide | Slide | <0 |
| M5 | Sticky | Slide | >0 | Sticky | Slide | >0 |
| M6 | Slide | Sticky | <0 | Slide | Sticky | <0 |
| M7 | Sticky | Slide | >0 | Slide | Slide | >0 |
| M8 | Slide | Sticky | <0 | Slide | Slide | <0 |
| M9-1 | Slide | Slide | >0 | Slide | Slide | >0 |
| M9-2 | Slide | Slide | <0 | Slide | Slide | <0 |

Notes: In Table 1, for ease of subsequent analysis and description, the motion status of the lens group component is described from a perspective of a rising edge and a falling edge of a drive signal, that is, separately corresponding to forward motion and backward motion of the transmission member from a perspective of the transmission member. The displacement is less than 0 or greater than 0, and may reflect a displacement direction of the lens group component relative to the transmission member. For example, in the drive mode M6, when the displacement corresponding to the zoom lens group component 11 is less than 0, it indicates that the zoom lens group component 11 generates a backward displacement relative to the transmission member, and the zoom lens group component 11 comes close to the drive part 21; and when the displacement corresponding to the focus lens group component 12 is greater than 0, it indicates that the focus lens group component 12 generates a forward displacement, and the focus lens group component 12 goes away from the drive part 21.

In a continuous focusing process, the zoom lens group component 11 needs to be first adjusted to implement zooming, and then the focus lens group component 12 needs to be adjusted to implement focusing. However, when the focus lens group component 12 is adjusted, it needs to ensure that the zoom lens group component 11 keeps static relative to the transmission member. Therefore, when the focus lens group component 12 is adjusted, the zoom lens group component 11 needs to stay in the sticky state relative to the transmission member. On this basis, it may be learned from Table 1 that when the zoom lens group component 11 is first adjusted, a drive mode corresponding to the zoom lens group component 11 needs to be selected from the drive modes M5 to M9-2; and when the focus lens group component 12 is subsequently adjusted, a drive mode corresponding to the focus lens group component 12 needs to be selected from M1 to M4-2. Specifically, the foregoing selection may be implemented by separately analyzing the corresponding motion statuses, the corresponding displacement information, and the like for the zoom lens group component 11 and the focus lens group component 12 based on the focusing requirement information and the current location information of the zoom lens group component 11 and the focus lens group component 12.

In an implementable solution, "determining the corresponding drive modes respectively for the two lens group components from the plurality of drive modes based on the focusing requirement information and the current location information of the two lens group components" in 102 may specifically include:

1021: Determine, based on the focusing requirement information and the current location information, a first target motion status and first target displacement information to which the zoom lens group component needs to correspond when a zooming function is implemented, and second target motion statuses and second target displacement information to which the zoom lens group component and the focus lens group component need to correspond when a focusing function is implemented.

1022: Determine, from the plurality of drive modes based on parameters in each of the plurality of drive modes, at least one first candidate drive mode that matches the first target motion status and the first target displacement information, and at least one second candidate drive mode that matches the second target motion statuses and the second target displacement information.

1023: Select and determine one of the at least one first candidate drive mode as a drive mode of the zoom lens group component, and select and determine one of the at least one second candidate drive mode as a drive mode of the focus lens group component.

For steps 1021 to 1023, when the current location information of the zoom lens group component 11 and the focus lens group component 12 is set as shown in FIG. 7, the following two examples are used:

Example 1

A zoom factor required by a user is greater than a current zoom factor of a camera module. In this case, the zoom lens group component 11 needs to be first adjusted to move backward relative to the transmission member to a corresponding target location. In other words, when the zooming function is implemented, the zoom lens group component 11 needs to be in a sliding state and generates a backward displacement (the displacement is less than 0). Then, the zoom lens group component 11 keeps static relative to the transmission member, and the focus lens group component 12 is adjusted to move forward relative to the transmission member. In other words, when the focusing function is implemented, the zoom lens group component needs to be in a sticky state and generates a displacement of 0, and the focus lens group component needs to be in a sliding state and generates a forward displacement (the displacement is greater than 0). On this basis, with reference to Table 1, one of the drive mode M6, the drive mode M8, and the drive mode M9-2 may be selected as a drive mode corresponding to the zoom lens group component 11, and one of the drive mode M2 and the drive mode 4-1 may be selected as a drive mode corresponding to the focus lens group component 12.

Example 2

A zoom factor required by a user is less than a current zoom factor of a camera module. In this case, the zoom lens group component 11 needs to be first adjusted to move forward relative to the transmission member to a corresponding target location. Then, the zoom lens group component 11 keeps static relative to the transmission member, and the focus lens group component 12 is adjusted to move backward relative to the transmission member. On this basis, one of the drive mode M5, the drive mode M7, and the drive mode M9-1 may be selected as a drive mode corresponding to the zoom lens group component 11, and one of the drive mode M3 and the drive mode M4-2 may be selected as a drive mode corresponding to the focus lens group component 12.

Specifically, when the drive mode is selected, to ensure that a continuous focusing function of the camera module can be implemented in the shortest time to improve user experience, a selection principle may be that a total time needed for completing driving the zoom lens group component 11 and the focus lens group component 12 is the shortest in the drive mode. On this basis, in a specific implementable technical solution, "selecting and determining one of the at least one first candidate drive mode as the drive mode of the zoom lens group component" in 1023 may be implemented by using the following steps:

10231: Select, based on parameters included in each first candidate drive mode, a first candidate drive mode that requires the shortest duration for completing driving the zoom lens group component, and determine the first candidate drive mode as the drive mode corresponding to the zoom lens group component.

"Selecting and determining one of the at least one second candidate drive mode as the drive mode corresponding to the focus lens group component" in 1023 may be implemented by using the following steps:

10232: Select, based on parameters included in each second candidate drive mode, a second candidate drive mode that requires the shortest duration for completing driving the focus lens group component, and determine the second candidate drive mode as the drive mode corresponding to the focus lens group component.

For example, still with reference to Example 1, it is assumed that the at least one first candidate drive mode determined for the zoom lens group component 11 includes the drive mode M6, the drive mode M8, and the drive mode M9-2 shown in FIG. 9A, and the at least one second candidate drive mode determined for the focus lens group component 12 includes the drive mode M2 and the drive mode 4-1 shown in FIG. 9A.

It is assumed that weights of the zoom lens group component 11 and the focus lens group component 12, and parameters such as a related pre-tightening force $F_N$ of the transmission member with each of the zoom lens group component 11 and the focus lens group component 12, a dynamic friction coefficient $\mu$, a displacement $s_0$ in forward and backward motion, a calculated acceleration a obtained by each of the zoom lens group component 11 and the focus lens group component 12 due to a dynamic friction force of the transmission member, and a critical time are shown in Table 2 below.

Table 2

|  | Zoom lens group component 11 | Focus lens group component 12 |
|---|---|---|
| $m$ (g) | 2 | 2 |
| $F_N$ (N) | 0.88 | 0.49 |
| $\mu$ | 0.145 | 0.145 |
| $s_0$ (um) | 0.4 | 0.4 |
| $a$ (m/s$^2$) | 65.2 | 36.9 |
| $t_c$ (us) | 78 | 104 |

On this basis, FIG. 9B shows division of drive modes in a case in which specific values of critical times corresponding to the zoom lens group component 11 and the focus lens group component 12 are respectively 78 $\mu$s and 104 $\mu$s. It may be learned from FIG. 9B that a first-duration value range and a second-duration value range that correspond to each first candidate drive mode and that are determined for the zoom lens group component 11 are specifically as follows:

Drive mode M6: $0<t_1\leq78$ $\mu$s, and $t_3-t_2>104$ $\mu$s.
Drive mode M8: $0<t_1\leq78$ $\mu$s, and $78$ $\mu$s$<t_3-t_2\leq104$ $\mu$s.
Drive mode M9-2: $0<t_1\leq78$ $\mu$s, $0<t_3-t_2\leq78$ $\mu$s, and $t_3-t_2>t_1$.

With reference to Table 1, in the drive mode M9-2, the zoom lens group component 11 is in the sliding state in both a rising edge duration and a falling edge duration of a drive signal. In other words, in a single cycle of the drive signal, the zoom lens group component 11 generates two opposite displacements (a generated backward displacement is greater than a forward displacement). A cancellation function exists between the opposite displacements. This causes a relatively small effective backward displacement generated by the zoom lens group component 11 in the single cycle. In this case, more cycles of the drive signal are required to drive the zoom lens group component to a corresponding target location, and a duration required for completing driving the zoom lens group component is longer than that in the drive mode M8 and the drive mode M6. The zoom lens group component is in the sliding state only in the rising edge time of the drive signal in the drive mode M8 and the drive mode M6. However, for both the drive mode M8 and the drive mode M6, if values of $t_1$ are the same (corresponding to a same value of the rising edge duration of the drive signal), a value of $t_3-t_2$ in the drive mode M8 is greater than that in the drive mode M6, that is, a falling edge duration of a drive signal corresponding to the drive mode M8 is longer. In this case, a total duration required for the single cycle of the drive signal is longer, and a duration required for completing driving of the zoom lens group component is longer than that in the drive mode M6.

In conclusion, to complete driving of the zoom lens group component in the shortest time, the drive mode M6 may be selected and determined as the drive mode corresponding to the zoom lens group component.

Similarly, the drive mode M2 may be selected and determined as a drive mode of the focus lens group component.

In other words, a solution of selecting a drive mode in which the continuous focusing function of the camera module can be implemented in the shortest time is: the drive mode M6 -> the drive mode M2.

After the respective drive modes of the zoom lens group component and the focus lens group component are determined, the drive signal may be determined based on the duration value ranges (the first-duration value range and the second-duration value range) included in the drive modes to be applied to the drive part of the drive apparatus. Specifically, in an implementable technical solution, "determining the drive signal based on the drive modes corresponding to the two lens group components" in 103 may include:

1031: Determine a first rising edge duration and a first falling edge duration of a single-cycle drive signal for the zoom lens group component based on a first-duration value range and a second-duration value range that are included in the drive mode of the zoom lens group component.

1032: Determine a second rising edge duration and a second falling edge duration of a single-cycle drive signal for the focus lens group component based on a first-duration value range and a second-duration value range that are included in the drive mode of the focus lens group component.

1033: Determine a first-cycle quantity of the drive signal required for the zoom lens group component and a second-cycle quantity of the drive signal required for the focus lens group component.

1034: Adjust a first-cycle quantity of consecutive signals in a preset signal based on the first rising edge duration and the first falling edge duration, and then adjust a second-cycle quantity of consecutive signals in the preset signal based on the second rising edge duration and the second falling edge duration, to obtain the drive signal.

The preset signal is a plurality of cycles of the signal, and may be but is not limited to a PWM signal, a sawtooth signal, or the like. This is not specifically limited in this embodiment.

For ease of understanding, the following describes steps 1031 to 1034 by using an example.

Still with reference to the example listed in step 1023, when continuous focusing is implemented, a selected and used drive mode is: the drive mode M8 corresponding to the zoom lens group component 11 to the drive mode M2 corresponding to the focus lens group component 12. A first-duration value range included in the drive mode M8 is $0 < t_1 \leq 78$ $\mu$s, and a second-duration value range is $104 \mu$s$< t_3 - 1_2 \leq 104 \mu$s. A first-duration value range included in the drive mode M2 is $104 \mu$s$< t_1$, and a second-duration value range is specifically $104 \mu$s$< t_3 - t_2 \leq 104 \mu$s. One duration value may be selected from each of the first-duration value range and the second-duration value range that are included in the drive mode M8. The duration values are respectively used as a first rising edge duration and a first falling edge duration of the single-cycle drive signal determined for the zoom lens group component. For example, for the zoom lens group component, specific values of some parameters of the drive mode M8 may be: $t_1 = 10 \mu$s (indicating that the first rising edge duration is specifically 10 $\mu$s) and $t_3 - t_2 = 80 \mu$s (indicating that the first falling edge duration is 80 $\mu$s). Likewise, one duration value may be selected from each of the first-duration value range and the second-duration value range that are included in the drive mode M8. The duration values are respectively used as a second rising edge duration and a second falling edge duration of the single-cycle drive signal determined for the focus lens group component. For example, for the focus lens group component 12, specific values of some parameters of the drive mode M2 may be: $t_1 = 110 \mu$s (indicating that the second rising edge duration is specifically 110 $\mu$s) and $t_3 - t_2 = 80 \mu$s (indicating that the second falling edge duration is 80 $\mu$s).

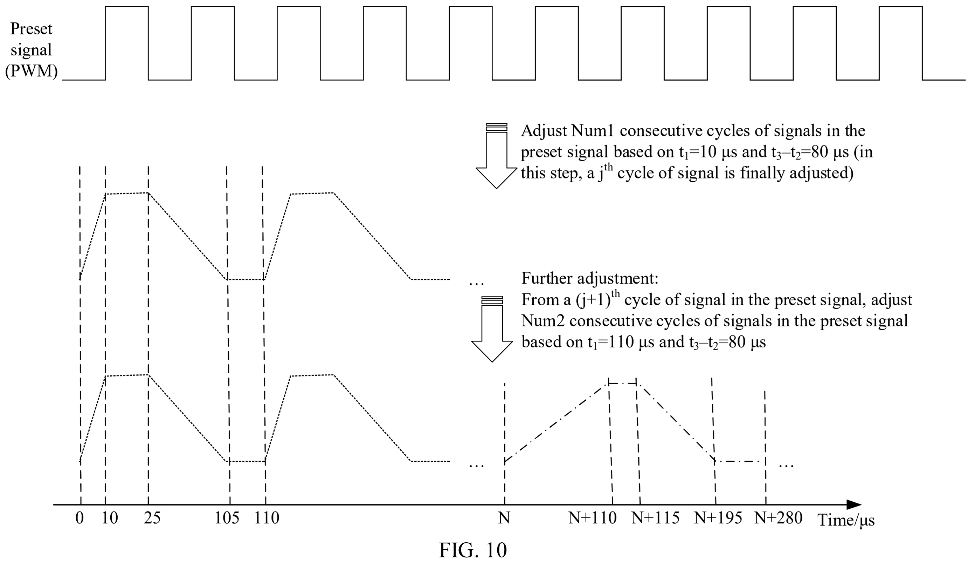

Further, it is assumed that the first-cycle quantity of the drive signal required for the zoom lens group component 11 is Num1, and the second-cycle quantity of the drive signal required for the focus lens group component 12 is Num2. With reference to FIG. 10, based on $t_1 = 10 \mu$s and $t_3 - t_2 = 80 \mu$s, a rising edge duration and a falling edge duration of Num1 consecutive cycles of signals in the preset signal may be adjusted. Adjustment is last performed for the jth cycle of signal in the preset signal in this step. Then, when adjustment is further performed for the preset signal, from the (j+1)th cycle of signal in the preset signal, a rising edge duration and a falling edge duration of M2 consecutive cycles of signals in the preset signal are adjusted based on $t_1 = 110 \mu$s and $t_3 - t_2 = 80 \mu$s. In this way, a required drive signal is finally obtained.

It may be learned from the example that values of time points of single-cycle drive signals corresponding to the zoom lens group component and the focus lens group component are shown in Table 3.

Table 3

| Drive mode | $t_0$ (us) | $t_1$ (us) | $t_2$ (us) | $t_3$ (us) | $t_4$ (us) | $\delta s$ (nm) |
|---|---|---|---|---|---|---|
| M8 | 0 | 10 | 25 | 105 | 110 | 393.5 |
| M2 | 0 | 110 | 115 | 195 | 280 | 163.8 |

In Table 3, $\delta s$ indicates a displacement accumulated by a lens group component under a single-cycle drive signal. The displacement $\delta s$ may be obtained through calculation based on a corresponding acceleration a shown in Table 2. For specific calculation implementation, refer to related content in the another embodiment above. For example, under the single-cycle drive signal, a displacement of the zoom lens group component 11 is 393.5 nm, and more specifically, a generated backward displacement is 393.5 nm. The displacement 393.5 nm may be calculated based on an acceleration $a = 65.2$ m/s$^2$ corresponding to the zoom lens group component 11 shown in Table 2 and a total sliding duration 25 $\mu$s corresponding to the sliding state of the zoom lens group component in the single-cycle drive signal. A driving speed (moving speed) corresponding to the lens group component can be obtained by dividing $\delta s$ by a total signal duration of the single-cycle drive signal. For example, when zooming is implemented, a driving speed corresponding to the zoom lens group component 11 is 393.5 nm/110 $\mu$s=3.6 mm/s; and when focusing is implemented, a driving speed corresponding to the focus lens group component 12 is 163.8 nm/280 $\mu$s=0.6 mm/s.

$\delta s$ shown in Table 3 may provide data support for determining a cycle quantity of the drive signal required by the lens group component.

Specifically, in a specific implementable technical solution, "determining the first-cycle quantity of the drive signal required for the zoom lens group component and the second-cycle quantity of the drive signal required for the focus lens group component" in 1033 may be implemented by using the following steps:

10331: Determine, based on the focusing requirement information, a first target location to which the zoom lens group component needs to be adjusted and a second target location to which the focus lens group component needs to be adjusted.

10332: Determine, based on displacement information included in the drive mode of the zoom lens group component, a first displacement that can be generated by the zoom lens group component in the single-cycle drive signal.

10333: Determine the first-cycle quantity based on the first displacement and a first location difference between a current location of the zoom lens group component and the first target location.

10334: Determine, based on displacement information included in the drive mode of the focus lens group component, a second displacement that can be generated by the focus lens group in the single-cycle drive signal.

10335: Determine the cycle quantity based on the second displacement and a second location difference between the second target location and a location of the focus lens group component when the zoom component reaches the first target location.

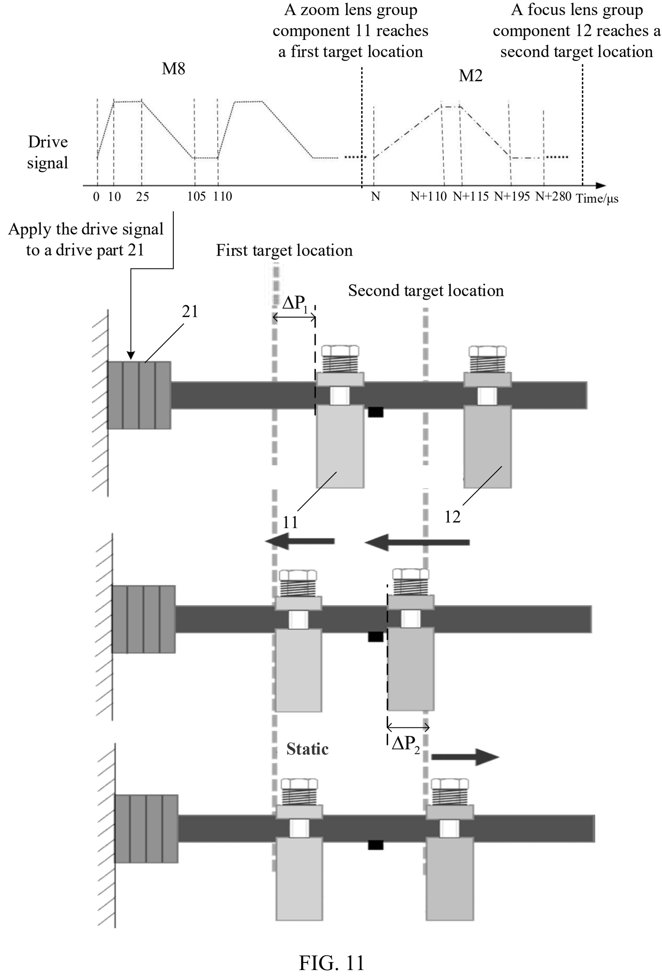

In specific implementation, as shown in FIG. 11, the zoom factor required by the user may be determined based on the focusing requirement information, and then the first target location to which the zoom lens group component needs to be adjusted and the second target location to which the focus lens group component needs to be adjusted are determined based on preset information about a correspondence between the zoom factor and each of the location of the zoom lens group component and the location of the focus lens group component.

Further, for the zoom lens group component 11, the first location difference $\Delta P_1$ between the current location of the zoom lens group component and the first target location may be calculated, so that the first-cycle quantity can be determined based on a first quotient obtained by dividing the first location difference $\Delta P_1$ by the first displacement $\delta s1$ (for example, 393.5 nm shown in Table 3 above). Likewise, for the focus lens group component, the second location difference $\Delta P_2$ between the second target location and the location of the focus lens group component when the zoom component reaches the first target location may be calculated, so that the second-cycle quantity can be determined based on a second quotient obtained by dividing the second location difference $\Delta P_2$ by the second displacement $\delta s2$ (for example, 163.8 nm shown in Table 3 above).

Further, in 104, the determined drive signal may be applied to the drive part 21 of the drive apparatus, and the drive part 21 drives, by using the drive signal, the zoom lens group component 11 and the focus lens group component 12 to move, to implement continuous automatic adjustment of zooming and focusing of the camera module.

For example, as shown in FIG. 11, after the drive signal determined based on the drive mode M8 and the drive mode M2 is applied to the drive part 21, the drive part 21 first drives the zoom lens group component 11 to move backward until the first target location is reached, to complete zooming. In this period, the focus lens group component 12 also moves backward at the same time. After reaching the first target location, the zoom lens group component 11 drives the focus lens group component 12 to move forward until the second target location is reached, to complete focusing. In this period, the zoom lens component 11 keeps static.

In conclusion, according to the technical solutions provided in this embodiment, the camera module has only one drive apparatus. The two corresponding lens group components on the camera module can be driven by using the drive apparatus, to implement the continuous focusing function. It can be learned that, compared with a conventional solution in which the continuous focusing function can be implemented by using two drive apparatuses (two motors), in this solution, structural complexity of the camera module can be effectively reduced, and a volume and costs of the camera module can be reduced. The drive apparatus includes the transmission member capable of performing forward and backward reciprocating motion in the axial direction. The two lens group components configured to implement the focusing function are disposed on the transmission member. Specifically, the continuous focusing function of the camera module is implemented in the following manner: obtaining focusing requirement information and current location information of the two lens group components; determining corresponding drive modes respectively for the two lens group components from a plurality of drive modes based on the focusing requirement information and the current location information of the two lens group components, where the plurality of drive modes are divided based on critical times at which motion statuses of the two lens group components change relative to the transmission member; and determining a drive signal based on the drive modes corresponding to the two lens group components, and controlling, based on the drive signal, the drive apparatus to drive the two lens group components to move, to implement the continuous focusing function. By using the drive signal determining manner provided in this solution, the drive apparatus can have a relatively good long drive stroke and high-precision drive control, thereby ensuring more accurate continuous focusing (or also referred to as continuous optical zooming) effect.

The camera module provided in this application may be installed on the device body of the terminal device. In this case, an embodiment of this application further provides a terminal device. The terminal device may be but is not limited to any electronic device that has a shooting function, such as a mobile phone, a tablet computer, a PDA (Personal Digital Assistant, Personal Digital Assistant), a netbook, a desktop computer, a virtual reality device (AR/VR device), an in-vehicle computer, a wearable device (such as a smart band), an unmanned aerial vehicle, or a security device.

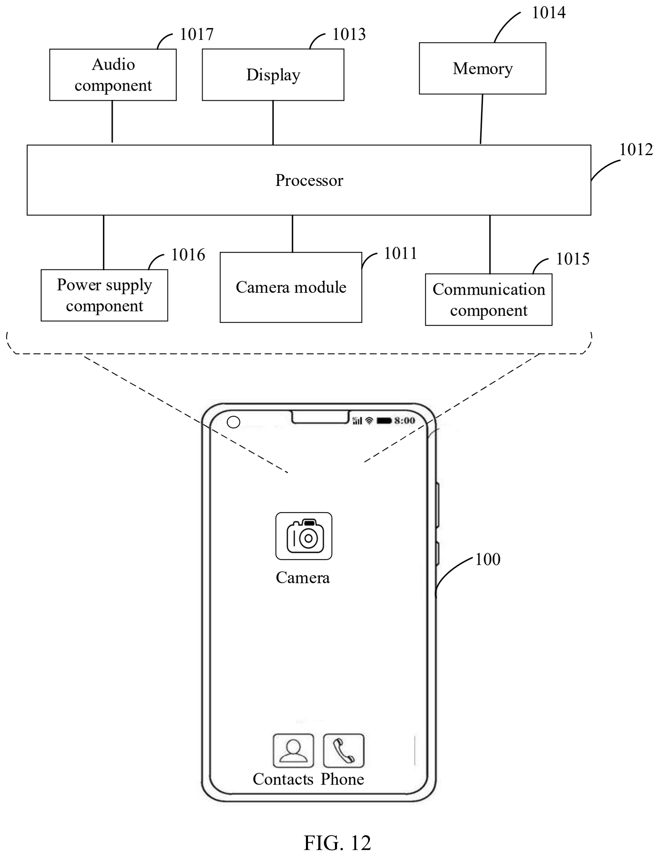

FIG. 12 is a diagram of a structure of a terminal device according to an embodiment of this application. As shown in FIG. 12, the terminal device 100 includes a device body (not shown in the figure) and a camera module 1011 provided in other embodiments of this application. The camera module is installed on the device body.

For details about the camera module 1011, refer to related content of other embodiments above.

In addition, the terminal device 100 may further include other components, such as a processor 1012, a display 1013, a memory 1014, a communication component 1015, a power supply component 1016, and an audio component 1017. FIG. 12 shows merely some components of the terminal device. This does not mean that the terminal device includes only the components shown in FIG. 12.

The processor 1012 is coupled to the memory 1014 and configured to execute a computer program in the memory 1014, to perform steps or functions in the camera module control method provided in other embodiments of this application.

The memory 1014 is configured to store a computer program, and may be configured to store various other types of data to support an operation on the terminal device. Examples of these data include instructions used for any application or method operating on the terminal device and the like. The memory 1014 may be implemented by any type of volatile or non-volatile storage device or a combination thereof, for example, a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disc.

The display 1013 may include an LCD (Liquid Crystal Display, liquid crystal display) display or an OLED (Organic Light-Emitting Diode, organic light-emitting diode) display, and is configured to display a system of a terminal device or an interface of each application. The display 1013 may further include a touch panel (TP) and the like. If the display 1013 includes a touch panel, the display 1013 may be implemented as a touchscreen to receive an input signal from a user. The touch panel includes one or more touch sensors to sense touching, sliding, and gestures on the touch panel. The touch sensor may not only sense a boundary of a touch or slide action, but also detect a duration and pressure that are associated with the touch or slide operation.

The communication component 1015 is configured to facilitate wired or wireless communication between the device including the communication component and another device. The device including the communication component may access a wireless network based on a communication standard, such as Wi-Fi, a mobile communication network such as 2G, 3G, 4G/LTE, or 5G, or a combination thereof. In an example embodiment, the communication component receives a broadcast signal or broadcast-related information from an external broadcast management system via a broadcast channel. In an example embodiment, the communication component further includes a near field communication (NFC) module to facilitate short range communication. For example, the NFC module may be implemented based on a radio frequency identification (RFID) technology, an infrared data association (IrDA) technology, an ultra wideband (UWB) technology, a Bluetooth (BT) technology, and another technology.

The power supply component 1016 provides power for various components of the device including the power supply component. The power supply component may include a power management system, one or more power supplies, and other components associated with power generation, management, and distribution of the device including the power supply component.

The audio component 1017 may be configured to output and/or input audio signals. For example, the audio component includes a microphone (MIC). The microphone is configured to receive an external audio signal when the device including the audio component is in an operating mode, for example, a call mode, a recording mode, and a voice recognition mode. The received audio signal may be further stored in the memory or sent via the communication component. In some embodiments, the audio component further includes one speaker configured to output an audio signal.

Correspondingly, an embodiment of this application further provides a computer-readable storage medium. The computer-readable storage medium stores a computer program. When the computer program is executed, steps in the foregoing method embodiments can be implemented.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media that include computer-usable program code. The computer-usable storage medium includes but is not limited to a disk memory, a CD-ROM, an optical memory, and the like.

This application is described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions can be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions can alternatively be loaded onto a computer or another programmable data processing device, so that a series of operations and steps are performed on the computer or the another programmable device to generate computer-implemented processing. Therefore, the instructions executed on the computer or the another programmable device provide steps for implementing a specific function in one or more procedures in the flowcharts and/or in one or more blocks in the block diagrams.

In a typical configuration, the computing device includes one or more processors (CPU), input/output interfaces, network interfaces, and memory.

The memory may include a form such as a non-permanent memory, a random access memory (RAM), or a non-volatile memory in a computer-readable medium, for example, a read-only memory (ROM) or a flash memory (flash RAM). The memory is an example of the computer-readable medium.

The computer-readable medium includes a non-volatile medium and a volatile medium, a removable medium and a non-removable medium, which may implement storage of information by using any method or technology. The information may be a computer-readable instruction, a data structure, a program module, or other data. Examples of the storage medium of the computer include but are not limited to a phase-change memory (PRAM), a static random access memory (SRAM), a dynamic random access memory (DRAM), another type of random access memory (RAM), a read-only memory (ROM), an electrically erasable programmable read-only memory (EEPROM), a flash memory or another memory technology, a compact disc read-only memory (CD-ROM), a digital versatile disk (DVD) or another optical storage, a magnetic cassette tape, a magnetic disk storage or another magnetic storage device, or any other non-transmission medium, which can be configured to store information accessible to a computing device. As specified in this specification, the computer-readable medium does not include transitory computer-readable media (transitory media), such as a modulated data signal and a carrier.

The foregoing descriptions are merely embodiments of this application, and are not intended to limit this application. For a person skilled in the art, various modifications and changes may be made in this application. Any modification, equivalent replacement, and improvement made in the spirit and principle of this application shall be included in the scope of the claims of this application.

**Claims**

1.  A camera module control method, wherein the camera module has a drive apparatus and a plurality of lens group components, the drive apparatus comprises a transmission member capable of performing forward and backward reciprocating motion in an axial direction, and two lens group components configured to implement a focusing function in the plurality of lens group components are movably disposed on the transmission member; and the method comprises:

    obtaining focusing requirement information and current location information of the two lens group components;
    determining corresponding drive modes respectively for the two lens group components from a plurality of drive modes based on the focusing requirement information and the current location information, wherein the plurality of drive modes are divided based on critical times at which motion statuses of the two lens group components change relative to the transmission member;
    determining a drive signal based on the drive modes corresponding to the two lens group components; and
    controlling, based on the drive signal, the drive apparatus to drive the two lens group components to move, to implement a continuous focusing function of the camera module.

2.  The method according to claim 1, further comprising:

obtaining a weight of a target lens group component and parameter information, related to the target lens group component, of the transmission member; and

calculating, based on the weight and the parameter information, a critical time corresponding to the target lens group component, wherein

the target lens group component is either one of the two lens group components, and the parameter information comprises: a pre-tightening force of the target lens group component for the transmission member, a dynamic friction coefficient of the transmission member, and a displacement of the transmission member in the forward and backward reciprocating motion.

3. The method according to claim 1, further comprising:

determining a plane rectangular coordinate system by using a first duration required for forward motion of the transmission member as an X-axis and a second duration required for backward motion as a Y-axis;

dividing the plane rectangular coordinate system based on the critical times corresponding to the two lens group components and an angle bisector of the plane rectangular coordinate system, to obtain a division result; and

determining the plurality of drive modes based on the division result.

4. The method according to any one of claims 1 to 3, wherein

the two lens group components comprise a zoom lens group component and a focus lens group component, and a critical time corresponding to the zoom lens group component is less than a critical time corresponding to the focus lens group component; and

each drive mode in the plurality of drive modes comprises the following parameters:

when the transmission member moves forward, a value range of the required first duration and motion statuses of the two lens group components relative to the transmission member;

when the transmission member moves backward, a value range of the required second duration and motion statuses of the two lens group components relative to the transmission member; and

displacement information respectively generated by the two lens group components in one time of forward and backward reciprocating motion of the transmission member.

5. The method according to claim 4, wherein determining the corresponding drive modes respectively for the two lens group components from the plurality of drive modes based on the focusing requirement information and the current location information comprises:

determining, based on the focusing requirement information and the current location information, a first target motion status and first target displacement information to which the zoom lens group component needs to correspond when a zooming function is implemented, and second target motion statuses and second target displacement information to which the zoom lens group component and the focus lens group component need to correspond when a focusing function is implemented;

determining, from the plurality of drive modes based on parameters comprised in each of the plurality of drive modes, at least one first candidate drive mode that matches the first target motion status and the first target displacement information, and at least one second candidate drive mode that matches the second target motion statuses and the second target displacement information; and

selecting and determining one of the at least one first candidate drive mode as a drive mode of the zoom lens group component, and selecting and determining one of the at least one second candidate drive mode as a drive mode of the focus lens group component.

6. The method according to claim 5, wherein selecting and determining one of the at least one first candidate drive mode as the drive mode corresponding to the zoom lens group component comprises:

selecting, based on parameters comprised in each first candidate drive mode, a first candidate drive mode that requires the shortest duration for completing driving the zoom lens group component, and determining the first candidate drive mode as the drive mode corresponding to the zoom lens group component; and

selecting and determining one of the at least one second candidate drive mode as the drive mode corresponding to the focus lens group component comprises:

selecting, based on parameters comprised in each second candidate drive mode, a second candidate drive mode that requires the shortest duration for completing driving the focus lens group component, and determining the second candidate drive mode as the drive mode corresponding to the focus lens group component.

7. The method according to claim 4, wherein determining the drive signal based on the drive modes corresponding to the two lens group components comprises:

determining a first rising edge duration and a first falling edge duration of a single-cycle drive signal for the zoom lens group component based on a first-duration value range and a second-duration value range that are comprised in the drive mode of the zoom lens group component;
determining a second rising edge duration and a second falling edge duration of a single-cycle drive signal for the focus lens group component based on a first-duration value range and a second-duration value range that are comprised in the drive mode of the focus lens group component;
determining a first-cycle quantity of the drive signal required for the zoom lens group component and a second-cycle quantity of the drive signal required for the focus lens group component; and
adjusting a first-cycle quantity of consecutive signals in a preset signal based on the first rising edge duration and the first falling edge duration, and then adjusting a second-cycle quantity of consecutive signals in the preset signal based on the second rising edge duration and the second falling edge duration, to obtain the drive signal.

8. The method according to claim 7, wherein determining the first-cycle quantity of the drive signal required for the zoom lens group component and the second-cycle quantity of the drive signal required for the focus lens group component comprises:

determining, based on the focusing requirement information, a first target location to which the zoom lens group component needs to be adjusted and a second target location to which the focus lens group component needs to be adjusted;
determining, based on displacement information comprised in the drive mode of the zoom lens group component, a first displacement that can be generated by the zoom lens group in the single-cycle drive signal;
determining the first-cycle quantity based on the first displacement and a first location difference between a current location of the zoom lens group component and the first target location;
determining, based on displacement information comprised in the drive mode of the focus lens group component, a second displacement that can be generated by the focus lens group in the single-cycle drive signal; and
determining the second-cycle quantity based on the second displacement and a second location difference between the second target location and a location of the focus lens group component when the zoom lens group component reaches the first target location.

9. A camera module, comprising:

a drive apparatus, comprising a transmission member capable of performing forward and backward reciprocating motion in an axial direction;
a plurality of lens group components, comprising two lens group components configured to implement a focusing function, wherein the two lens group components are movably disposed on the transmission member; and
a control apparatus, configured to implement steps in the camera module control method according to any one of claims 1 to 8.

10. The camera module according to claim 9, wherein the drive apparatus further comprises a drive part fastened to one end of the transmission member and configured to perform reciprocal bending deformation under a drive signal, to drive the transmission member to perform forward and backward reciprocating motion.

11. The camera module according to claim 10, wherein

the drive apparatus is a piezoelectric drive apparatus; and
the drive part comprises at least one layer of piezoelectric vibrator, and reciprocal bending deformation occurs on the piezoelectric vibrator under a drive signal.

12. The camera module according to any one of claims 9 to 11, further comprising: a limiting apparatus, disposed between the two lens group components.

13. A terminal device, comprising a device body and the camera module according to any one of claims 9 to 12, wherein the camera module is installed on the device body.

FIG. 1

FIG. 2A

FIG. 2B

Front view

Side view

FIG. 3

Original shape   Bent forward (slow)   Bent backward (fast)   Bent forward (slow)   Bent backward (fast)

$N^{th}$ time of reciprocating bending

$(N+1)^{th}$ time of reciprocating bending

FIG. 4A

Vp — Rising edge duration — Falling edge duration — Vpmax — 0 — $t_1$ — $t_2$ — $t_3$ — $t_4$ — Time

$y_2$ — Vp — Displacement y2 – Time curve of a moving part 23

FIG. 4B

Obtain focusing requirement information and current location information of two lens group components — 101

Determine corresponding drive modes respectively for the two lens group components from a plurality of drive modes based on the focusing requirement information and the current location information, where the plurality of drive modes are divided based on critical times at which motion statuses of the two lens group components change relative to a transmission member — 102

Determine a drive signal based on the drive modes corresponding to the two lens group components — 103

Control, based on the drive signal, a drive apparatus to drive the two lens group components to move, to implement a continuous focusing function of a camera module — 104

FIG. 5

FIG. 6

FIG. 7

FIG. 8

Zoom lens
group
component 11

Focus lens
group
component 12

$t_3\text{-}t_2$

M6     M3     M1

Focus lens
group
component 12

$t_{c2}=\sqrt{\dfrac{m_2 s_0}{\mu(m_2 g + F_{N2})}}$

M4-2

M8          M2

M4-1

Zoom lens
group
component 11

$t_{c1}=\sqrt{\dfrac{m_1 s_0}{\mu(m_1 g + F_{N1})}}$

M9-2

M7     M5

M9-1

0

$t_{c1}=\sqrt{\dfrac{m_1 s_0}{\mu(m_1 g + F_{N1})}}$    $t_{c2}=\sqrt{\dfrac{m_2 s_0}{\mu(m_2 g + F_{N2})}}$

$t_1$

## FIG. 9A

Zoom lens
group
component 11

Focus lens
group
component 12

$t_3\text{-}t_2$

M6     M3     M1

Focus lens
group
component 12

$t_{c2}=104\ \mu s$

M4-2

M8          M2

M4-1

Zoom lens
group
component 11

$t_{c1}=78\ \mu s$

M9-2

M7     M5

M9-1

0     $t_{c1}=78\ \mu s$    $t_{c2}=104\ \mu s$    $t_1$

## FIG. 9B

FIG. 9C

Preset
signal
(PWM)

Adjust Num1 consecutive cycles of signals in the preset signal based on $t_1=10$ μs and $t_3-t_2=80$ μs (in this step, a $j^{th}$ cycle of signal is finally adjusted)

...

Further adjustment:
From a $(j+1)^{th}$ cycle of signal in the preset signal, adjust Num2 consecutive cycles of signals in the preset signal based on $t_1=110$ μs and $t_3-t_2=80$ μs

...    ...

0   10   25    105  110                          N       N+110  N+115   N+195   N+280   Time/μs

FIG. 10

EP 4 746 434 A1

A zoom lens group component 11 reaches a first target location

A focus lens group component 12 reaches a second target location

M8

M2

Drive signal

0  10  25        105 110                    N      N+110 N+115  N+195 N+280  Time/μs

Apply the drive signal to a drive part 21

First target location

Second target location

ΔP₁

21

11        12

Static

ΔP₂

FIG. 11

FIG. 12

## INTERNATIONAL SEARCH REPORT

| International application No. |
| --- |
| **PCT/CN2024/116420** |

| A. | CLASSIFICATION OF SUBJECT MATTER |
| --- | --- |
| | H04N23/67(2023.01)i |

According to International Patent Classification (IPC) or to both national classification and IPC

| B. | FIELDS SEARCHED |
| --- | --- |

Minimum documentation searched (classification system followed by classification symbols)

IPC:H04N23/-

Documentation searched other than minimum documentation to the extent that such documents are included in the fields searched

Electronic data base consulted during the international search (name of data base and, where practicable, search terms used)

CNABS, CNTXT, ENTXTC, WPABSC, CNKI, VEN, ENTXT, USTXT, WOTXT, JPTXT, IEEE: 摄像模组, 成像模组, 单一, 同一, 共用, 马达, 驱动, 电机, 致动, 变焦, 变倍, 调焦, 对焦, 聚焦, 合焦, 镜头, 镜群, 透镜, 重量, 质量, 速度, 加速度, 时长, 时间, 相对位移, camera, imaging module, single, same, share, motor, drive, actuator, zoom, focus, lens, weight, mass, speed, acceleration, time, relative displacement

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2000134526 A (KONISHIROKU PHOTO INDUSTRIES CO., LTD.) 12 May 2000 (2000-05-12)<br>description, paragraphs 87-105 | 1-13 |
| A | CN 115701116 A (HUAWEI TECHNOLOGIES CO., LTD.) 07 February 2023 (2023-02-07)<br>entire document | 1-13 |
| A | JP 2022063888 A (CANON K.K.) 25 April 2022 (2022-04-25)<br>entire document | 1-13 |
| A | US 2013113986 A1 (ALTEK CORP.) 09 May 2013 (2013-05-09)<br>entire document | 1-13 |
| A | JP 2007065333 A (CANON K.K.) 15 March 2007 (2007-03-15)<br>entire document | 1-13 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **09 October 2024** | **06 November 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/116420**

| Patent document cited in search report | | | Publication date (day/month/year) | Patent family member(s) | | | Publication date (day/month/year) |
|---|---|---|---|---|---|---|---|
| JP | 2000134526 | A | 12 May 2000 | US | 6839086 | B1 | 04 January 2005 |
| CN | 115701116 | A | 07 February 2023 | WO | 2023005675 | A1 | 02 February 2023 |
| | | | | EP | 4354193 | A1 | 17 April 2024 |
| JP | 2022063888 | A | 25 April 2022 | | None | | |
| US | 2013113986 | A1 | 09 May 2013 | TW | 201319712 | A | 16 May 2013 |
| | | | | TWI | 440951 | B | 11 June 2014 |
| JP | 2007065333 | A | 15 March 2007 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311323424